(19) Europäisches Patentamt
European Patent Office
Office européen des brevets

(11) Veröffentlichungsnummer: **0 379 166 B1**

(12) # EUROPÄISCHE PATENTSCHRIFT

(45) Veröffentlichungstag der Patentschrift: **13.07.94**

(51) Int. Cl.[5]: **C08F 216/14**, C09D 7/06, C08L 29/10, C08F 299/00

(21) Anmeldenummer: **90100904.3**

(22) Anmeldetag: **17.01.90**

(54) **Verwendung von Copolymerisaten von Alkylvinylethern als Verlauf- oder Antischaummittel in Beschichtungs- und Formmassen.**

(30) Priorität: **20.01.89 DE 3901608**

(43) Veröffentlichungstag der Anmeldung:
**25.07.90 Patentblatt 90/30**

(45) Bekanntmachung des Hinweises auf die Patenterteilung:
**13.07.94 Patentblatt 94/28**

(84) Benannte Vertragsstaaten:
**AT BE CH DE DK ES FR GB GR IT LI LU NL SE**

(56) Entgegenhaltungen:
**EP-A- 0 182 234**
**US-A- 2 748 083**

(73) Patentinhaber: **Byk-Chemie GmbH**
**Postfach 10 02 45**
**D-46463 Wesel(DE)**

(72) Erfinder: **Haubennestel, Karl-Heinz, Dipl.Ing.**
**Hermann-Hesse Strasse 30**
**D-4230 Wesel(DE)**
Erfinder: **Bubat, Alfred**
**Gotenstrasse 19**
**D-4230 Wesel 15(DE)**

(74) Vertreter: **Türk, Gille, Hrabal, Leifert**
**Brucknerstrasse 20**
**D-40593 Düsseldorf (DE)**

**EP 0 379 166 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendüng einer wirksamen Menge an Copolymerisaten von Alkylvinylethern zur Verbesserung des Verlaufs (Levelling) und/oder zur Verhinderung oder Beseitigung von Schaum in Überzugs- und Formmassen.

Überzugs- und Formmassen sind Harzsysteme, die Harze (natürliche Harze und/oder Kunstharze) als Bindemittel enthalten und nachfolgend und im zitierten Stand der Technik beschrieben sind.

Es ist bekannt, als verlaufsfördernde Mittel in organischen Harzsystemen für Beschichtungen Polysiloxane oder Polysiloxancopolymere einzusetzen. Der Zusatz von niedermolekularen Dimethylpolysiloxanen und Methylphenylpolysiloxanen ist beschrieben in den DE-C- 1 111 320 und DE-C-1 092 585. Auch ist bekannt, daß polyoxyalkylenmodifizierte Dimethylpolysiloxane eingesetzt werden, um ähnliche Effekte zu erreichen. ("Goldschmidt informiert" 7/1982, Nr. 56, Seite 2; 6. Fatipec-Kongreß, 1962, Seite 332). Auch ist es bekannt, Polyacrylate bestimmter Molekulargewichtsbereiche als Verlaufhilfsmittel einzusetzen.

Der Nachteil bei den Polysiloxanen liegt, sofern sie in den Harzsystemen löslich sind, in der stark oberflächenspannungsreduzierenden Eigenschaft. Hierdurch wird die Tendenz der Harzsysteme zum Schäumen verstärkt. Außerdem neigen Polysiloxane dazu, Störungen in der Zwischenschichthaftung zu verursachen. Bekanntermaßen werden solche Produkte auch als Trennmittel eingesetzt. Die Polyacrylate neigen genauso wie die unverträglichen Polysiloxane zu Trübungen im unpigmentierten Harzsystem. Die üblicherweise als Verlaufhilfsmittel eingesetzten Produkte, wirken im wesentlichen durch ihre stark oberflächenspannungsreduzierende Eigenschaft mit den damit verbundenen Nachteilen.

Als Entschäumer werden ebenfalls Polysiloxane, Polysiloxancopolymere oder Polyacrylate eingesetzt. Diese Polymeren wirken aufgrund ihrer begrenzten Löslichkeit und Reduzierung der Oberflächenspannung. Diese Produkte neigen dazu, aufgrund ihrer starken Unverträglichkeit Krater und Trübungen in den Beschichtungssystemen zu verursachen. Werden diese Harzsysteme nicht, wie normalerweise üblich, in organischen Lösemitteln gelöst, sondern in Wasser oder Gemischen aus Wasser und wassermischbaren Lösemitteln, wie Butylglykol, tritt die Kraterbildung aufgrund der noch stärkeren Unverträglichkeit und der höheren Oberflächenspannungsdifferenz noch deutlicher auf.

In der US-A-3 127 352 werden hochmolekulare Polyalkylvinylether als Entschäumer für flüssige Kohlenwasserstoffe beschrieben. Diese Produkte sind in wässrigen Systemen aufgrund ihrer Unverträglichkeit völlig ungeeignet.

Bei Einsatz in organischen Systemen führen hochmolekulare Polyvinylalkylether häufig zu Beschichtungsfehlern z.B. in Form von Verlaufstörungen und Kratern. Ein weiterer Nachteil dieser Produkte ist aufgrund ihrer Unverträglichkeit die schnelle Separation bei Lagerung der Harzsysteme. In nicht-pigmentierten Harzsystemen führt diese Unverträglichkeit auch zu starken Eintrübungen der Beschichtung. Als Entschäumer in wässrigen Medien wurden Polyalkylvinylether empfohlen (US-A-4 692 267). Der Nachteil dieser Produkte liegt in der generellen Unverträglichkeit in wässrigen Systemen begründet. Eine leichte Verbesserung der Einarbeitung in die wässrigen Medien kann laut der Lehre der Veröffentlichung durch den Einsatz von Emulgatoren erreicht werden. Solche Emulgatoren wirken jedoch nur temporär bei der Einarbeitung der Entschäumer in das Harzsystem. Bei Lagerung der Harzsysteme neigen die unverträglichen Substanzen dazu, sich aus dem Harzsystem abzuscheiden und als unverträgliches Tröpfchen oder Partikel Störungen der Beschichtungssysteme zu verursachen.

Die Copolymerisation dieser beschriebenen Alkylvinylether mit anderen Monomeren, wie Acrylsäure- oder Methacrylsäureestern ist limitiert, da literaturbekannt nur eine alternierende Copolymerisation zu technisch interessanten Ausbeuten führt. Werden aber solche hohen Mengen an (Meth)-Acrylmonomeren eingesetzt, geht der eigentliche Effekt der Polyalkylvinylether verloren.

Der vorliegenden Erfindung liegt die Aufgabenstellung zugrunde, Alkylvinylether-Copolymerisate zur Förderung des Verlaufs und der Entschäumung zu verwenden, welche die vorgenannten Nachteile nicht aufweisen, insbesondere eine bessere Verträglichkeit in den unterschiedlichen Harzsystemen aufweisen, auch wenn diese Harzsysteme in unterschiedlich polaren Lösemitteln gelöst werden, wie Benzine oder Wasser und damit weniger Neigungen zu Störungen, wie Kraterbildung aufweisen. Auch soll durch den Zusatz solcher Verlaufhilfsmittel und Entschäumer die Zwischenschichthaftung zwischen zwei nacheinander aufgebrachten Schichten nicht beeinträchtigt werden.

Überraschenderweise wurde gefunden, daß Copolymerisate von Alkylvinylethern mit polaren Alkylvinyletherderivaten eine verbesserte Verträglichkeit in Harzsystemen und in wässrigen Harzsystemen eine selbstemulgierende Eigenschaft und verbesserte Emulsionsstabilität aufweisen. Somit werden Störungen wie Krater, Trübungen und Separationserscheinungen weitgehend vermieden.

Die Kraterneigung dieser Polyalkylvinylether wird nicht nur vermieden, sondern aufgrund der verlaufsfördernden Eigenschaften werden auch durch andere Störfaktoren (z.B. Silikone, Mineralöle, höher molekulare Harzpartikel, Staubeinfall) verursachte Krater eliminiert oder vermindert.

Gegenstand der Erfindung ist somit die Verwendung einer zur Verbesserung des Verlaufs (Levelling) und/oder zur Verhinderung oder Beseitigung von Schaum in Beschichtungs- und Formmassen wirksamen Menge an Copolymerisaten von Alkylvinylethern, die auf 100 gleiche oder verschiedene wiederkehrende Einheiten der Formel

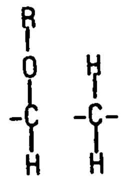

(Ia)

worin R eine $C_{1-18}$ Alkyl- oder $C_mF_{2m+1}$-$(CH_2)_2$-Gruppe darstellt,
wobei m eine Zahl von 4 bis 18 ist,
1 bis 100 gleiche oder verschiedene wiederkehrende Einheiten der Formel

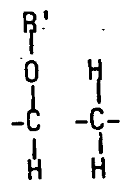

(IIa)

enthalten,
worin R' für eine der folgenden Gruppen steht:

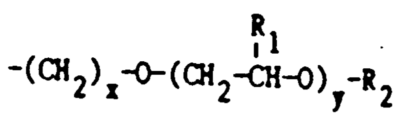

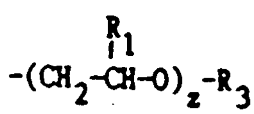

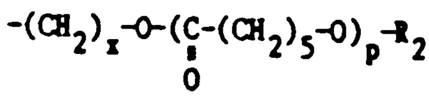

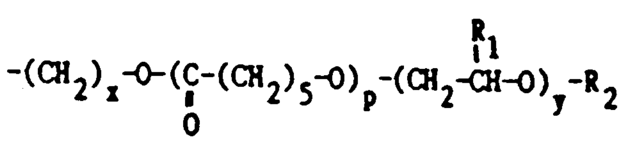

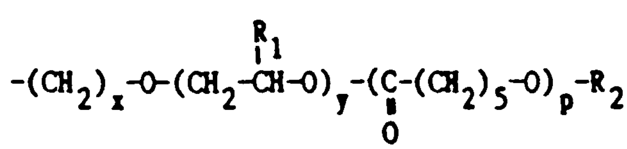

$$-(CH_2)_x-Q-(CH_2-\overset{R_1}{\overset{|}{CH}}-O)_y-R_2$$

$$-(CH_2)_x-Q-\left((CH_2)_5-\underset{\underset{O}{\|}}{C}-O\right)_p-R_6$$

$$-(CH_2)_x-Q-\left((CH_2)_5-\underset{\underset{O}{\|}}{C}-O\right)_p-(CH_2-\overset{R_1}{\overset{|}{CH}}-O)_y-R_3$$

$$-(CH_2)_x-Q-(\overset{R_1}{\overset{|}{CH}}-CH_2-O)_y-\left((CH_2)_5-\underset{\underset{O}{\|}}{C}-O\right)_p-R_6$$

$-(CH_2)_{2-4}-NR_4R_5$

wobei die Symbole folgende Bedeutungen haben:

$R_4$ und $R_5$ sind Alkylgruppen mit 1 bis 4 C-Atomen oder bilden zusammen mit dem N-Atom einen 5- oder 6-gliedrigen Ring, welcher kein Zerewittinoff H-Atom enthält,

$R_1$ ist $CH_3$ oder H,

$R_2$ ist H, $-C_2H_{2n+1}$,

$$-\underset{\underset{O}{\|}}{C}-CH_3$$

oder

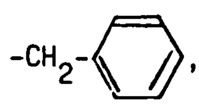

n ist eine Zahl von 1 bis 4,

$R_3$ ist $C_{1-22}$-Alkyl - oder Phenyl , das durch 1 bis 3 $C_{1-9}$-Alkylgruppen substituiert sein kann,

Q ist eine Gruppe mit der Struktur

$$-O-\underset{\underset{O}{\|}}{C}-NH-R_7-NH-\underset{\underset{O}{\|}}{C}-O-$$

$R_6$ ist $C_{1-22}$ Alkyl

$R_7$ ist Alkylen mit 6 oder 9 C-Atomen, 1,3,3,-Trimethylcyclohexylen-1-methylen,Methylphenylen,

x ist eine Zahl Von 2 bis 6,

y ist eine Zahl von 0 bis 50,

z ist eine Zahl von 1 bis 50,

p ist eine Zahl Von 1 bis 15.

Die oben beschriebenen Copolymerisate sind also solche enthaltend Monomere der allgemeinen Formel

$R-O-CH=CH_2$ (I)

die, bezogen auf 100 Mol gleiche oder verschiedene Monomere der Formel I, 1 bis 100 Mol gleiche oder verschiedene Monomere der Formel

$R'-O-CH=CH_2$ (II)

einpolymerisiert enthalten, wobei die Symbole die obigen Bedeutungen haben.

Die gemäß der Erfindung verwendeten Copolymerisate können dadurch hergestellt werden, daß die Monomeren in an sich bekannter Weise miteinander copolymerisiert werden, wie dies nachfolgend im einzelnen erläutert wird. Es können aber auch Monomere copolymerisiert werden, welche noch nicht die vollständigen Gruppen enthalten, die durch das Symbol R' definiert sind, sondern Prekursoren davon mit z.B. endständigen Hydroxylgruppen. Nach der Copolymerisation können dann diese Hydroxylgruppen umgesetzt werden, wobei die restlichen Molekülteile der durch das Symbol R' definierten Gruppen angeknüpft werden. Auch dies wird nachfolgend im einzelnen erläutert.

Als Beispiele für monomere Vinylether der Formel I $R-O-CH=CH_2$ sind Methylvinylether, Ethylvinylether, Propylvinylether, Isopropylvinylether, Butylvinylether, Isobutylvinylether, Hexylvinylether, 2-Ethylhexylvinylether, Decylvinylether und Octadecylvinylether zu nennen. Besonders bevorzugt sind Ethylvinylether und Isobutylvinylether.

Verbindungen der Formel I, worin R eine Methylgruppe bedeutet, werden in der Regel nicht als einzige Monomere der Formel I eingesetzt, sondern allenfalls im Gemisch mit anderen Monomeren der Formel I, in denen das Symbol R also für Alkylgruppen mit 2 bis 18 C-Atomen steht.

Verbindungen der Formel I, in denen H-Atome durch Fluoratome ersetzt sind, sind z.B. Perfluorhexylethylvinylether und Perfluoroctylethylvinylether. Die Verwendung bzw. Mitverwendung dieser Verbindungen hat insbesondere die Wirkung, daß die Oberflächenaktivität der Copolymerisate deutlich erhöht und die entschäumende Wirkung verbessert wird.

Als monomere Vinylether der Formel $R'-O-CH=CH_2$ können hydroxylgruppenhaltige Vinylether wie Hydroxyethylvinylether, Hydroxypropylvinylether, Hydroxybutylvinylether und Alkoxylate dieser hydroxylgruppenhaltigen Vinylether eingesetzt werden. Solche und weitere hydroxylgruppenhaltige Vinylether sind beschrieben in der US-A-3 328 468. Aber auch vinylierte Alkoxypolyoxyalkylenglykole wie Methoxypolyethylenglykolmonovinylether oder Butoxypolyethylenpolypropylenglykolmonovinylether sind geeignet. Ebenso sind geeignet Vinylether von tertiären Stickstoff enthaltenden Verbindungen, wie Diethyl- -oder Dimethylaminoethylvinylether oder Morpholinoethylvinylether. Solche Verbindungen sind zugänglich durch Vinylierung von z.B. Diethylaminoethanol nach bekannten Verfahren.

Die hydroxylgruppenhaltigen Vinylether der Formel II $R'-O-CH=CH_2$ können mit Lactonen wie $\epsilon$-Caprolacton zu den entsprechenden Monohydroxypolyestervinylethern umgesetzt werden. Beispiele für polymerisierbare Lactone und Methoden zur Polymerisation können der US-A-4 360 643 entnommen werden.

Solche Monohydroxypolyestervinylether können ebenfalls alkoxiliert werden. Auf den Stand der Technik wird hierbei verwiesen. Mit solchen Maßnahmen läßt sich die Verträglichkeit der Copolymerisate an die entsprechenden Harzsysteme anpassen. Wenn Hydroxylgruppen in den Copolymerisaten unerwünscht sind, z.B. wegen möglichen Reaktionen mit dem Harzsystem, können diese Hydroxylgruppen geschützt, z.B. acetyliert werden. Die erwähnten Maßnahmen der Polyveresterung mit Lactonen und/oder Veretherung mit Alkylenoxiden lassen sich nach dem Stand der Technik an den hydroxylgruppenhaltigen Copolymerisaten durchführen.

In den Formeln bedeutet x vorzugsweise eine Zahl von 2 bis 4, besonders bevorzugt 4.

y hat bevorzugt folgende Bedeutungen 0 bis 30, besonders bevorzugt 0 bis 10.

z hat bevorzugt die Bedeutungen 1 bis 30, besonders bevorzugt 1 bis 10.

p hat bevorzugt die Bedeutung 1 bis 10, besonders bevorzugt 1 bis 5.

Verbindungen der Formel II, worin $R_1$ für Wasserstoff steht, sind Verbindungen mit Polyoxyethylengruppen. Diese Verbindungen bewirken besonders gute Verträglichkeit in wässrigen Harzsystemen. Verbindungen der Formel II, worin $R_1$ eine Methylgruppe bedeutet, besitzen stärkere Verträglichkeit in Harzsystemen auf Basis organischer Lösungsmittel. Wie nachfolgend auch erwähnt wird, können Gemische dieser Comonomeren eingesetzt werden, und durch geeignete Auswahl dieser Comonomeren und deren Anteile kann die Verträglichkeit der gemäß der Erfindung verwendeten Polymerisate gesteuert werden. Gruppen mit dem Symbol $R_3$ sind Gruppen, wie sie üblicherweise in nichtionogenen Tensiden vorliegen. Auf den diesbezüglichen Stand der Technik wird verwiesen.

Monomere der Formel I und/oder Formel II können auch Monomermischungen darstellen und in dem beanspruchten Mischungsverhältnis copolymerisiert werden. Überraschenderweise sind bereits Mengen von einem Mol solcher Monomeren der Formel II, bezogen auf 100 Mol Monomere der Formel I, wirksam im Sinne der Erfindung.

Bevorzugt werden bis zu 30 Mol Monomere der Formel II, ganz besonders bevorzugt 5 bis 25 Mol Monomere der Formel II auf 100 Mol Monomere der Formel I eingesetzt. Die Copolymerisate enthalten also, bezogen auf 100 wiederkehrende Einheiten der Formel Ia, 5 bis 25 wiederkehrende Einheiten der Formel IIa.

Besonders bevorzugt sind Copolymerisate mit wiederkehrenden Einheiten der Formel Ia, worin das Symbol R für einen Alkylrest mit 2 bis 8 C-Atomen, noch stärker bevorzugt mit 2 bis 4 C-Atomen steht.

Nach einer anderen bevorzugten Ausführungsform enthalten die Copolymerisate mindestens teilweise als wiederkehrende Einheiten der Formel Ia solche, in denen das Symbol R für einen Perfluoralkylethylrest steht mit 4 bis 10 C-Atomen in der Perfluoralkylkette. Dabei ist es bevorzugt, daß von 100 wiederkehrenden Einheiten der Formel Ia mindestens 5 Einheiten solche sind, in denen das Symbol R die vorgenannte Bedeutung hat.

Hinsichtlich der wiederkehrenden Einheiten der Formel IIa sind solche bevorzugt, in denen das Symbol R' für einen Hydroxybutylenrest steht. Nach einer anderen Ausführungsform sind bevorzugt solche Copolymerisate, die wiederkehrende Einheiten der Formel IIa enthalten, worin das Symbol R' für einen Alkoxypolyoxyalkylenrest steht mit einem mittleren Molekulargewicht Mw von 300 bis 1000. Bevorzugt sind wiederum solche Copolymerisate mit wiederkehrenden Einheiten der Formel IIa, in denen das Symbol R' für einen Polyester mit der Formel

$$-(CH_2)_4-O-(\underset{\underset{O}{\|}}{C}-(CH_2)_5-O)_p-\underset{\underset{O}{\|}}{C}-CH_3$$

und p für 2 bis 8 stehen.

Die erfindungsgemäß verwendeten Copolymerisate werden hergestellt durch übliche in der Literatur gut beschriebene Methoden. Es kommen kationische und radikalische Methoden in Frage. (Methoden der organischen Chemie, Houben Weyl E 20/II, Seiten 1071 ff.)

Hydroxylgruppenhaltige Vinylether müssen radikalisch polymerisiert werden, um unerwünschte Nebenreaktionen zu vermeiden.

Eine bevorzugte Form der Herstellung der erfindungsgemäß zu verwendenden Copolymerisate ist die bereits erwähnte stufenweise Reaktionsführung, ausgehend von polymeren Precursoren mit Hydroxylgruppen und nachfolgender Veresterung mit Lactonen und/oder Alkoxylierung. Außerdem sind solche Polyether- und/oder polyesterhaltigen Vinylethercopolymerisate auch erhältlich durch Addition von monoisocyanatfunktionellen Polyether- und/oder Polyesteraddukten. Diese Addukte werden hergestellt, indem die monohydroxyfunktionellen Polyester oder Polyether mit Diisocyanaten umgesetzt werden in einem solchen Verhältnis der eingesetzten Diisocyanate zu den OH-Gruppen, daß vorzugsweise nur eine Isosyanatgruppe des Diisocyanats umgesetzt wird. Dies kann beispielsweise dadurch erreicht werden, daß Diisocyanate mit unterschiedlicher Reaktivität der Isocyanatgruppen eingesetzt werden. Solche Diisocyanate sind z.B. das Isophorondiisocyanat. Bei diesem Diisocyanat ist die cycloaliphatisch gebundene -NCO-Gruppe ca. um den Faktor 10 reaktionsträger, als die aliphatisch gebundene -NCO-Gruppe.

Außerdem kann die Reaktionsführung zum Monoaddukt erleichtert werden, indem das Diisocyanat in höheren Molmengen im Verhältnis zu den eingesetzten OH-Gruppen eingesetzt wird als für die Monoadduktbildung notwendig wäre. Der Überschuß an eingesetztem Diisocyanat wird durch Vakuumdestillation, vorzugsweise mit dem Dünnschichtverdampfer, entfernt.

Das mittlere Molekulargewicht $\overline{M}w$ der erfindungsgemäß verwendeten Polyalkylvinylethercopolymerisate sollte zwischen 400 und 50000 liegen. Bevorzugt liegt das $\overline{M}w$ zwischen 1000 und 10000, ganz besonders bevorzugt zwischen 1500 und 5000.

Das mittlere Molekulargewicht $\overline{M}w$ kann z.B. gelpermeationschromatografisch bestimmt werden.

Das Gewichtsmittel des Molekulargewichtes ist dabei als $\overline{M}w$ definiert (Houben Weyl - Methoden der organischen Chemie - Georg Thieme Verlag, Stuttgart-Band XIV/1, Seite 19).

Die erfindungsgemäß verwendeten Polyalkylvinylethercopolymerisate sollten den Harzsystemen vorzugsweise nach der Herstellung oder aber erst bei oder nach der Fertigstellung der Rezeptur zugesetzt werden. Vorteilhaft ist es, die Polyalkylvinylethercopolymerisate mit Antioxidantien in Mengen von etwa 100 bis 500 ppm zu versetzen, um die Stabilität gegen Oxidation zu gewährleisten. Bewährt haben sich hier z.B.-p- tert. Butylphenol und 4-Methoxyphenol.

Die erfindungsgemäß verwendeten Polyalkylvinylethercopolymerisate können zur Verwendung als Verlaufhilfsmittel oder Entschäumer sinnvollerweise in geeigneten Lösemitteln angelöst werden, welche zweckmäßig den in den Harzrezepturen verwendeten Lösemitteln ähnlich sein können. Geeignet sind z.B. Ester wie

Ethylacetat, Butylacetat und Diallylphthalat, Ketone wie Diisobutylketon, Methylethylketon, Glykolether wie Butylglykol, Ethylglykol und Propylenglykolmonomethylether, Glykoletheracetate wie Ethylglykolacetat, Propylenglykolmonomethyletheracetat, Aromaten wie Toluol, Xylol, Styrol sowie Testbenzine und auch Mischungen dieser Lösungsmittel untereinander. Auch die Verwendung der 100%igen Polymerisate ist möglich, besonders in Harzsystemen, die lösemittelfrei verarbeitet werden sollen.

Die entschäumende Wirkung kann in ansich bekannter Weise dadurch verstärkt werden, daß man die gemäß der Erfindung verwendeten Copolymerisate, gegebenenfalls wie oben beschrieben in gelöster Form, mit hydrophober Kieselsäure (DE-C-3 442 727) oder mit in situ gebildeten Harnstoffderivaten (EP-A-115 585, US-A-4 696 761) herstellt und in Form solcher Mischungen verwendet, d.h. den Beschichtungs- und Formmassen zusetzt.

Beschichtungs- und Formmassen im Sinne der Erfindung können die verschiedensten Harzsysteme enthalten. Beschichtungsmassen sind z.B. Lacke, sonstige Anstrichmittel, Druckfarben.

Diese Harze können sehr unterschiedlich in ihrem chemischen Aufbau sein und physikalisch oder chemisch aushärten, wie dies gemäß dem Stand der Technik bekannt ist. Beispiele für physikalisch trocknende Bindemittel sind solche auf Basis von Nitrocellulose, Acrylat-Methacrylat, Chlorkautschuk, PVC-Mischpolymerisaten, Polyvinylestern, Polystyrol, Polystyrolcopolymeren und Copolymeren des Butadiens. Beispiele für chemische härtende bzw. trocknende Bindemittel sind lufttrocknende Alkydharze, Alkyd-Melaminharze, Acrylat-Melaminharze, Acrylat-Isocyanatharze, Polyester-Isocyanatharze, Epoxidharze, gesättigte und ungesättigte Polyesterharze, Phenolformaldehydharze und Harnstoffalkydharze.

Als flüssige Phase können diese Bindemittel organische Lösungsmittel und/oder Wasser oder Weichmacher enthalten, wie dies gemäß dem Stand der Technik bekannt ist. Die flüssige Phase kann auch in Form von Monomeren oder niedermolekularen Verbindungen vorliegen, die mit den anderen Bindemittelkomponenten unter Bildung der Lacküberzüge reagieren.

Die Harzsysteme können auch anodisch oder kathodisch abscheidbare Kunstharze (ATL/KTL) sein. Bei diesen Systemen handelt es sich um wässrige Lacke, bei denen die Harze z.B. Carboxylgruppen oder Amingruppen enthalten und über Salzbildung die Wasserlöslichkeit und elektrische Abscheidbarkeit erzielt wird.

Die Harzsysteme gemäß der Erfindung können auch sogenannte Pulverlackharze sein, die also keine flüssige Phase enthalten und in Form von Pulvern auf die zu beschichtenden Substrate aufgebracht und dort zum Schmelzen und gegebenenfalls Reagieren gebracht werden. Die Harzsysteme gemäß der Erfindung können auch sonst übliche Zusatzstoffe enthalten. Beispiele hierfür sind Netz- und Dispergiermittel, Füllstoffe wie Glasfasern, Kohlenstoffasern, Polyamidfasern, Silikate, anorganische Carbonate und Aluminiumhydroxid, Katalysatoren und/oder Beschleuniger für die Härtung, rheologisch wirksame Mittel usw. Die Härtung der Beschichtungs- und Formmassen erfolgt entsprechend den darin enthaltenen Bindemitteln, wie dies dem Fachmann bekannt ist, z.B. also durch radikalische Polymerisation oder Polyaddition.

Die Harzsysteme können auch in dickeren Schichten angewendet werden. Man spricht dann von Dickschichtsystemen wie Fußbodenbeschichtungen und Dachbeschichtungen. Werden diese Harze nicht auf Substrate aufgebracht, sondern frei tragend mit Hilfe von Formen oder formgebenden Werkzeugen verarbeitet, so spricht man von Laminaten oder Formkörpern. Auch hier treten die beschriebenen Verlaufstörungen und Entschäumungsprobleme auf, und die erfindungsgemäßen Polyvinylethercopolymerisate können genauso erfolgreich zur Problemlösung eingesetzt werden.

Die Menge der den Harzsystemen zugesetzten Polyalkylvinylethercopolymeren ist wie gemäß dem Stand der Technik so groß, daß der gewünschte Effekt hinsichtlich einer ausreichenden Förderung des Verlaufs und Entschäumung erzielt wird. Es können sehr geringe Mengen ausreichen, um einen merklichen Effekt zu erzielen. Bevorzugt beträgt die Menge an Polyvinylethercopolymeren mindestens etwa 0,0001 Gew.%, besonders bevorzugt mindestens etwa 0,001 bis 0,01 Gew.%, bezogen auf das Gesamtgewicht des Harzsystems. Die obere Grenze für den Gehalt an Polyvinylalkylethercopolymeren wird gegeben durch eine ausreichende Wirkung und dem Wunsch, die Menge möglichst gering zu halten, so daß aus Preisgründen ein übermäßiger Zusatz in der Regel vermieden wird. Die obere Grenze liegt im allgemeinen bei etwa 3,0 Gew.%, bevorzugt bei etwa 2,0 Gew.%, und besonders bevorzugt bei etwa 0,5 Gew.%, bezogen auf das Gesamtgewicht der Harzsysteme.

In den nachfolgenden Herstellungsbeispielen 1-11 wird die Herstellung der erfindungsgemäß verwendeten Alkylvinylethercopolymerisate erläutert.

Die kationische Polymerisation der erfindungsgemäßen Polymerisate erfolgt nach folgender allgemeiner Arbeitsvorschrift.

**Beispiel 1:**

In einem Vierhalskolben mit Rührer, Rückflußkühler, Thermometer und Inertgaszuleitung wird unter Stickstoff 100 g über ein mit Molekularsieb getrocknetes Toluol und 0,10 g $BF_3$-Etherat vorgelegt. Innerhalb von 2,5 Stunden wird ein Gemisch aus 160 g Vinylisobutylether und 40 g $CH_2=CH-O-(CH_2)_4-O-(CH_2-CH_2O)_8-CH_3$ bei einer Reaktionstemperatur von 30° C zugetropft. Nach Beendigung der Zutropfphase beträgt die Nachreaktionszeit 1 Stunde bei 50° C. Nach Reaktionsende wird dem Reaktionsgemisch 0,5 g 25%-ige Ammoniaklösung und 50 ml bidestilliertes Wasser zugegeben und intensiv gerührt. Danach wird die untere, wässrige Phase abgetrennt. Nach weiterem zweimaligen Waschen mit je 100 ml bidestilliertem Wasser wird das Toluol und das Restwasser bei 80° C und einem Druck von 20 mbar abdestilliert.
Das erhaltene klare, leicht gelbliche Produkt weist eine Viskosität von 810 mPas auf. Aus der gelchromatographischen Untersuchung ergibt sich für das Gewichtsmittel des Molekulargewichts $\overline{M}_w$ = 2230.

In der Tabelle 1 sind weitere Beispiele von Copolymeren aufgeführt, welche gemäß Beispiel 1 durch Variation der Monomeren und der Initiatorkonzentration hergestellt werden.

Tabelle 1

| Beispiel | Monomere | Gewichtsverhältnis [%] | Initiator-konzentration | $\bar{M}_w$ | Modifizierung mit hydrophoben Feststoffen |
|---|---|---|---|---|---|
| Beispiel 2 | Ethylvinylether<br>$CH_2=CH-O-(-CH_2)_4-O(CH_2-CH_2-O)_6-CH_3$ | 85<br>15 | 100 ppm | 3950 | keine |
| Beispiel 3 | Isobutylvinylether<br>2-Ethylhexylvinylether<br>$CH_2=CH-O-(CH_2)_4-O(CH_2-CH_2-O)_4\ CH_3$ | 70<br>20<br>10 | 200 ppm | 3080 | Für den Einsatz als Entschäumer wird nach der Reaktion bei Raumtemperatur zusätzlich 5 g hydrophobe Kieselsäure mit einer spezifischen Oberfläche von 90 m²/g eindispergiert. |
| Beispiel 4 | Isobutylvinylether<br>$CH_2=CH-O-(CH_2)_2-(CF_2)_6-CF_3$<br>$CH_2=CH-O-(CH_2)_4-O(CH_2-CH_2-O)_8-CH_3$ | 70<br>20<br>10 | 500 ppm | 1910 | Gleiche Modifizierung wie unter Beispiel 3 beschrieben |

Die radikalische Polymerisation der erfindungsgemäßen Polymerisate erfolgt nach folgender allgemeiner Arbeitsvorschrift.

**Beispiel 5:**

In einem Druckreaktor mit Rührer und Dosierpumpe versehen, werden 160 g Isobutylvinylether und 40 g Tetraethylenglykolmonovinylether vorgelegt und unter einem Stickstoffdruck von 10 bar auf 120° C aufgeheizt. Nach Erreichen der Temperatur werden 0,75 ml t-Butylperacetat zudosiert. Nachdem, bedingt durch die exotherme Reaktion, die Temperatur auf 140° C gestiegen ist, beträgt die Nachreaktionszeit 30 Minuten. Anschließend wird bei einer Reaktionstemperatur von 140° C über einen Zeitraum von 45 Minuten 0,75 ml t-Butylperacetat zudosiert. Die Nachreaktionszeit beträgt 45 Minuten. Das erhaltene klare, leicht gelbliche Produkt weist eine Viskosität von 960 mPas auf. Aus der gelchromatographischen Untersuchung ergibt sich für das Gewichtsmittel des Molekulargewichts $\overline{M}_w$ = 1050.

In der Tabelle 2 sind weitere Beispiele von Copolymeren aufgeführt, welche gemäß Beispiel 5 durch Variation der Monomeren und der Initiatorkonzentration hergestellt werden.

**TABELLE 2**

| Beispiel | Monomere | Gewichtsverhältnis [%] | Initiator-konzentration | $\bar{M}_w$ | Modifizierung mit hydrophoben Feststoffen |
|---|---|---|---|---|---|
| Beispiel 6 | Isobutylvinylether<br>Hydroxybutylvinylether | 85<br>15 | 1 % | 1340 | keine |
| Beispiel 7 | Isobutylvinylether<br>Ethylvinylether<br>Hydroxybutylvinylether | 65<br>20<br>15 | 1 % | 1650 | keine |
| Beispiel 8 | Ethylvinylether<br>Triethylenglykolmonovinylether | 80<br>20 | 2 % | 1950 | Gleiche Modifizierung wie unter Beispiel 3 beschrieben |
| Beispiel 9 | 2-Ethylhexylvinylether<br>Hydroxybutylvinylether | 75<br>25 | 2 % | 2400 | Für den Einsatz als Entschäumer wird nach der Reaktion bei Raumtemperatur zusätzlich nacheinander 0,85 g Hexamethylendiisocyanat und 1,6 g Decylamin zugegeben und 15 Minuten dispergiert. |

**Beispiel 10:**

In einem Vierhalskolben mit Rührer, Rückflußkühler, Thermometer und Inertgaszuleitung wird unter Stickstoff 78 g Copolymer gemäß Beispiel 6 vorgelegt und auf 70° C aufgeheizt. Nach Erreichen der Reaktionstemperatur werden 100 ppm Dibutylzinndilaurat und 56 g eines Methoxypolyoxyethylentoluylendii-

socyanatadduktes mit folgender Struktur

$$CH_3-(O-CH_2-CH_2)_8-O-\underset{\underset{O}{\|}}{C}-NH-CH_3C_6H_3-NCO$$

innerhalb von 30 Minuten zugegeben.

Nach einer Nachreaktionszeit von 60 Minuten weist das erhaltene Produkt eine Viskosität von 3850 mPas und einen Rest-NCO-Gehalt von <0,1 % auf. Aus der gelchromatographischen Untersuchung ergibt sich für das Gewichtsmittel des Molekulargewichts $\overline{M}_w$ = 3850.

**Beispiel 11:**

In einem Reaktionsgefäß, mit Rührer und Rückflußkühler versehen, werden 78 g Copolymer gemäß Beispiel 6 mit 58 g ε-Caprolacton versetzt und nach Zugabe von 100 ppm Dibutylzinndilaurat unter Stickstoff auf 160° C aufgeheizt. Nach 6 Stunden Reaktionszeit weist das Produkt einen Festkörper von >98 % auf. Aus der gelchromatographischen Untersuchung ergibt sich für das Gewichtsmittel des Molekulargewichts $\overline{M}_w$ = 2730.

Die in den Beispielen aufgeführten Copolymere wurden in den nachfolgend aufgeführten Lacksystemen 1 und 2 geprüft. Vergleichend hierzu wurden 5 nicht erfindungsgemäße Homo- bzw. Copolymerisate von Alkylvinylethern geprüft.

Vergleichspolymer 1: Polyisobutylvinylether $\overline{M}_w$ 1150
Vergleichspolymer 2: Polyisobutylvinylether $\overline{M}_w$ 110000
Vergleichspolymer 3: Polyethylvinylether $\overline{M}_w$ 3650
Vergleichspolymer 4: Polyethylvinylether $\overline{M}_w$ 85000
Vergleichspolymer 5: Copolgmerisat aus 2-Ethylhexylvinylether und Isobutylvinylether $\overline{M}_w$ 1250.

Als Prüfkriterien wurden je nach Prüfsystem der Verlauf der Lackoberfläche, die Untergrundbenetzung, die Bindemittelverträglichkeit und das Schaumverhalten bei Applikation geprüft.

Bei der Prüfung des Verlaufs wurde visuell gewertet, wobei besonderes Augenmerk auf die sogenannte "Orangenschalenstruktur" gerichtet wurde. Eine starke "Orangenschalenstruktur" wurde als negativ bewertet, eine glatte homogene kraterfreie Oberfläche als positiv. Die Benetzung wurde visuell erfaßt und als positiv bewertet, wenn eine vollständige Substratbenetzung stattgefunden hatte. Negativ wurde bewertet, wenn teilweise ein Zurückziehen des nassen Lackfilms vom Substrat erfolgte und somit keine homogene Oberfläche entstanden ist.

Die Prüfung der Bindemittelverträglichkeit erfolgte visuell anhand von 100 µm dicken Klarlackschichten aufgezogen auf Glasplatten.

Die Bewertung des Schaumverhaltens erfolgte durch visuelle Auswertung von mittels Schaumwalze aufgetragenen Dispersionslacken.

50 g des Dispersionslackes werden auf eine Penetrationskontrastkarte (500 $cm^2$) gegeben und mit einer Schaumwalze so gleichmäßig verteilt, daß 12,5 g nasser Farbe (= 250 $g/m^2$) auf der Karte verbleiben. Durch die Verwendung der aus offenporigen Polyurethanschaum bestehenden Schaumwalze (Breite 6 cm), werden nicht nur die in der Farbe eingeschlossenen Schaumbläschen beurteilt, sondern zusätzlich die Luft, welche ähnlich der Pinselapplikation in den Anstrich eingearbeitet wird. Nach dem Trocknen wird der Anstrich auf Lufteinschlüsse (Blasenbildung) visuell nach folgender Vergleichsskala beurteilt:

1 = kein Lufteinschluß
2 = sehr wenig Lufteinschluß
3 = wenig Lufteinschluß
4 = mäßiger Lufteinschluß
5 = starker Lufteinschluß
6 = sehr starker Lufteinschluß

Zusätzlich wurde der Lufteinschluß in Volumen % nach folgender Methode bestimmt.

80 Gewichts % des fertigen Dispersionslackes wurden mit 20 Gewichts % Wasser gemischt und jeweils 1 Minute bei 2000 Upm mit einem Dissolver (Dispergierscheibe 40 mm Durchmesser) gerührt.

Anschließend wird das Gewicht von 50 ml dieses Gemisches bestimmt. Je höher das Gewicht der Probe, um so niedriger ist der Gehalt an Luft, um so besser also die Wirkung des Entschäumers.

Als Beispiel für formmassen wurden glasfaserverstärkte Prüfplatten (250 mm*250mm*5mm) nach dem Injektionsverfahren gefertigt. Nach dem Aushärten und Entformen werden die Prüfplatten visuell auf Lufteinschluß, Glasfaservenetzung und Transparenz nach folgenden Vergleichsskalen beurteilt:

Lufteinschluß:

1 = kein Lufteinschluß
2 = sehr wenig Lufteinschluß
3 = wenig Lufteinschluß
4 = mäßiger Lufteinschluß
5 = starker Lufteinschluß
6 = sehr starker Lufteinschluß

Faserbenetzung:

1 = sehr gute Faserbenetzung
2 = gute Faserbenetzung
3 = mäßige Faserbenetzung

Die Ergebnisse sind in der Tabelle 3, 4 und 5 zusammengestellt und zeigen deutlich die Überlegenheit der erfindungsgemäß verwendeten Mittel.

| **Lack 1** photopolymerisierbarer Möbellack | |
|---|---|
| Ungesättigtes Glanzpolyesterharz 68%-ig in Styrol | 92,59 Gew.% |
| Styrol | 7,41 Gew. % |
| | 100,00 Gew. % |

Härtung: 2 Durchläufe
80 W/cm UV-Strahler 1,6 m/Min.

| **Lack 2** Glanzdispersionslack | |
|---|---|
| Acrylatdispersion (Primal$^R$ AC 4800/Rohm and Haas) 40%ig | 57,60 Gew.% |
| Konservierer | 0,10 Gew.% |
| $TiO_2$ | 18,75 Gew.% |
| Dibutylphthalat | 2,34 Gew.% |
| Tri-n-butylphosphat | 3,50 Gew.% |
| Propylenglykol | 7,50 Gew.% |
| Verdickungsmittel | 2,80 Gew.% |
| Netz- u. Dispergiermittel | 0,85 Gew.% |
| Wasser | 6,56 Gew.% |
| | 100,00 Gew.% |

PVK: 18,5 %
Glanzgrad 20° (DIN 67530): 80

Injektionsharz

| | |
|---|---|
| Ungesättigtes Polyesterharz (Basis Isophthalsäure) | 98 Gew.% |
| Cobaltoctoatlösung 1 %ig | 1 Gew.% |
| Peroxidhärter (Methylethylketonperoxid) | 1 Gew.% |
| | 100 Gew.% |

**Tabelle 3 - Verlaufprüfung - Lack 1**

| Beispiel | Dosierung | Verlauf | Transparenz | Untergrundbenetzung |
|---|---|---|---|---|
| Vergleichspolymer 1 | 0,05 % | gut | trüb | gut |
| Vergleichspolymer 2 | 0,05 % | Krater | trüb | Krater |
| Vergleichspolymer 3 | 0,05 % | gut | trüb | gut |
| Vergleichspolymer 4 | 0,05 % | Krater | trüb | Krater |
| Vergleichspolymer 5 | 0,05 % | gut | trüb | gut |
| Beispiel 1 | 0,05 % | sehr gut | klar | sehr gut |
| Beispiel 2 | 0,05 % | sehr gut | klar | sehr gut |
| Beispiel 5 | 0,05 % | sehr gut | klar | sehr gut |
| Beispiel 6 | 0,05 % | sehr gut | klar | sehr gut |
| Beispiel 7 | 0,05 % | sehr gut | klar | sehr gut |
| Beispiel 10 | 0,05 % | sehr gut | klar | sehr gut |
| Beispiel 11 | 0,05 % | sehr gut | klar | gut |

**Tabelle 4 - Entschäumerprüfung - Lack 2**

| Beispiel | Dosierung | Entschäumung | Verlauf | Glanzgrad bei 20° |
|---|---|---|---|---|
| Vergleichspolymer 1 | 0,05 %1 | 4 | gut | 74 |
| Vergleichspolymer 1 | 0,15 % | 3 | gut | 69 |
| Vergleichspolymer 2 | 0,05 % | 6 | Krater | nicht meßbar |
| Vergleichspolymer 2 | 0,15 % | 6 | Krater | nicht meßbar |
| Vergleichspolymer 3 | 0,05 % | 5 | gut | 73 |
| Vergleichspolymer 3 | 0,15 % | 4 | gut | 70 |
| Vergleichspolymer 4 | 0,05 % | 6 | Krater | nicht meßbar |
| Vergleichspolymer 4 | 0,15 % | 5 | Krater | nicht meßbar |
| Vergleichspolymer 5 | 0,05 % | 4 | schlecht | 70 |
| Vergleichspolymer 5 | 0,15 % | 3 | schlecht | 65 |
| Beispiel 3 | 0,05 % | 3 | gut | 79 |
| Beispiel 3 | 0,15 % | 1 | sehr gut | 81 |
| Beispiel 4 | 0,05 % | 3 | gut | 80 |
| Beispiel 4 | 0,15 % | 1-2 | gut | 80 |
| Beispiel 8 | 0,05 % | 2 | gut | 80 |
| Beispiel 8 | 0,15 % | 1 | sehr gut | 79 |
| Beispiel 9 | 0,05 % | 3 | gut | 80 |
| Beispiel 9 | 0,15 % | 2 | gut | 79 |
| O-Probe | - | 6 | gut | 80 |

Tabelle 5

| - Prüfplatten Injektionsverfahren - | | | | |
|---|---|---|---|---|
| Beispiel | Dosierung | Lufteinschluß | Glasfaserbenetzung | Transparenz |
| Vergleichspolymer 1 | 0,05 % | 4 | 2 | leicht trüb |
| Vergleichspolymer 2 | 0,05 % | 1 | 2 | trüb |
| Vergleichspolymer 3 | 0,05 % | 5 | 3 | leicht trüb |
| Vergleichspolymer 4 | 0,05 % | 3 | 2 | trüb |
| Vergleichspolymer 5 | 0,05 % | 3 | 2 | trüb |
| Beispiel 1 | 0,05 % | 3 | 2 | klar |
| Beispiel 2 | 0,05 % | 3 | 2 | klar |
| Beispiel 5 | 0,05 % | 2 | 1 | klar |
| Beispiel 6 | 0,05 % | 1-2 | 1 | klar |
| Beispiel 7 | 0,05 % | 2 | 2 | klar |
| Beispiel 10 | 0,05 % | 2-3 | 2 | klar |
| Beispiel 11 | 0,05 % | 2 | 1-2 | klar |

## Patentansprüche

**1.** Verwendung einer wirksamen Menge an Copolymerisaten von Alkylvinylethern, die auf 100 gleiche oder verschiedene wiederkehrende Einheiten der Formel

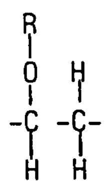

(Ia)

worin R eine $C_{1-18}$ Alkyl- oder $C_mF_{2m+1}$-$(CH_2)_2$-Gruppe darstellt,
wobei m eine Zahl von 4 bis 18 ist,

1 bis 100 gleiche oder verschiedene wiederkehrende Einheiten der Formel

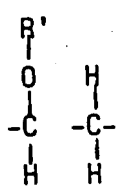

(IIa)

enthalten,
worin R' für eine der folgenden Gruppen steht:

$$-(CH_2)_x-O-(CH_2-\overset{R_1}{\overset{|}{CH}}-O)_y-R_2$$

$$-(CH_2-\overset{R_1}{\overset{|}{CH}}-O)_z-R_3$$

$$-(CH_2)_x-O-(\underset{O}{\underset{\|}{C}}-(CH_2)_5-O)_p-R_2$$

$$-(CH_2)_x-O-(\underset{O}{\underset{\|}{C}}-(CH_2)_5-O)_p-(CH_2-\overset{R_1}{\overset{|}{CH}}-O)_y-R_2$$

$$-(CH_2)_x-O-(CH_2-\overset{R_1}{\overset{|}{CH}}-O)_y-(\underset{O}{\underset{\|}{C}}-(CH_2)_5-O)_p-R_2$$

$$-(CH_2)_x—Q-(CH_2-\overset{R_1}{\overset{|}{CH}}-O)_y R_2$$

$$-(CH_2)_x—Q-\left((CH_2)_5-\underset{O}{\underset{\|}{C}}-O\right)_p-R_6$$

$$-(CH_2)_x—Q-\left((CH_2)_5-\underset{O}{\underset{\|}{C}}-O\right)_p-(CH_2-\overset{R_1}{\overset{|}{CH}}-O)_y-R_3$$

$$-(CH_2)_x—Q-(\overset{R_1}{\overset{|}{CH}}-CH_2-O)_y-\left((CH_2)_5-\underset{O}{\underset{\|}{C}}-O\right)_p-R_6$$

$-(CH_2)_{2-4}-NR_4R_5$

wobei die Symbole folgende Bedeutungen haben:

$R_4$ und $R_5$ sind Alkylgruppen mit 1 bis 4 C-Atomen oder bilden zusammen mit dem N-Atom einen 5- oder 6-gliedrigen Ring, welcher kein Zerewittinoff H-Atom enthält,

$R_1$ ist $CH_3$ oder H,

$R_2$ ist H, $-C_nH_{2n+1}$,

$$-\underset{O}{\underset{\|}{C}}-CH_3$$

oder

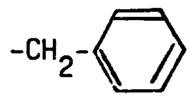,

n ist eine Zahl von 1 bis 4,
$R_3$ ist $C_{1-22}$-Alkyl oder Phenyl, das durch 1 bis 3 $C_{1-9}$-Alkylgruppen substituiert sein kann,
Q ist eine Gruppe mit der Struktur

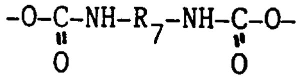

$R_6$ ist $C_{1-22}$ Alkyl
$R_7$ ist Alkylen mit 6 oder 9 C-Atomen, 1,3,3,-Trimethylcyclohexylen-1-methylen,Methylphenylen,
x ist eine Zahl von 2 bis 6,
y ist eine Zahl von 0 bis 50,
z ist eine Zahl von 1 bis 50,
p ist eine Zahl von 1 bis 15.

zur Verbesserung des Verlaufs (Levelling) und/oder zur Verhinderung oder Beseitigung von Schaum in Beschichtungs- und Formmassen.

**2.** Verwendung von Copolymerisaten nach Anspruch 1, dadurch gekennzeichnet, daß in der Formel Ia das Symbol R für einen Alkylrest mit 2 bis 8 C-Atomen steht.

**3.** Verwendung von Copolymerisaten nach Ansprüchen 1 und 2, dadurch gekennzeichnet, daß in der Formel Ia das Symbol R für einen Alkylrest mit 2 bis 4 C-Atomen steht.

**4.** Verwendung von Copolymerisat nach Anspruch 1, dadurch gekennzeichnet, daß in der Formel Ia das Symbol R für einen Perfluoralkylethylrest steht mit 4 bis 10 C-Atomen in der Perfluoralkylkette.

**5.** Verwendung von Copolymerisaten nach Ansprüchen 1 bis 4, dadurch gekennzeichnet, daß von 100 wiederkehrenden Einheiten der Formel Ia mindestens 5 Einheiten solche nach Anspruch 4 sind.

**6.** Verwendung von Copolymerisaten nach einem oder mehreren der Ansprüche 1 bis 5, dadurch gekennzeichnet, daß die Copolymerisate bezogen auf 100 wiederkehrende Einheiten der Formel Ia 5 bis 25 wiederkehrende Einheiten der Formel IIa enthalten.

**7.** Verwendung von Copolymerisaten nach den Ansprüchen 1 bis 6, dadurch gekennzeichnet, daß in der Formel IIa das Symbol R' für einen Hydroxybutylenrest steht.

**8.** Verwendung von Copolymerisaten nach den Ansprüchen 1 bis 6, dadurch gekennzeichnet, daß in der Formel IIa das Symbol R' für einen Alkoxypolyoxyalkylenrest steht mit einem mittleren Molekulargewicht $\overline{M}w$ von 300 bis 1000.

**9.** Verwendung von Copolymerisaten nach den Ansprüchen 1 bis 6, dadurch gekennzeichnet, daß in der Formel IIa das Symbol R' für einen Polyester mit der Formel

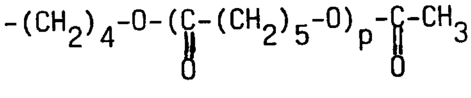

und p für 2 bis 8 stehen.

## Claims

**1.** Use of an effective quantity of alkyl vinyl ether copolymers, which, for each 100 identical or different repeat units of the formula

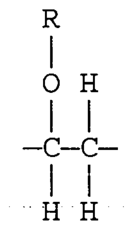

(Ia),

in which R represents a $C_{1-18}$ alkyl or $C_mF_{2m+1}$-$(CH_2)_2$ group, wherein m is a number from 4 to 18, contain 1 to 100 identical or different repeat units of the formula

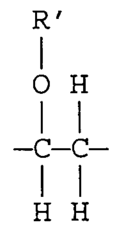

(IIa),

in which R' stands for one of the following groups:

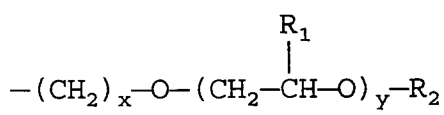

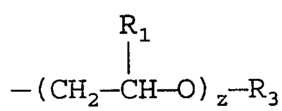

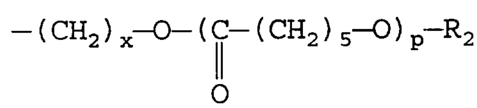

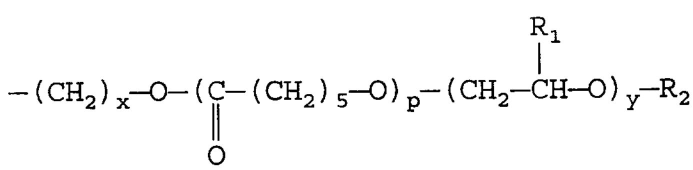

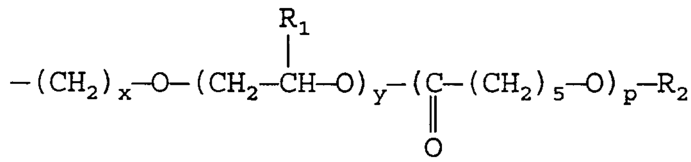

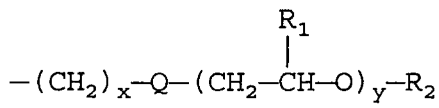

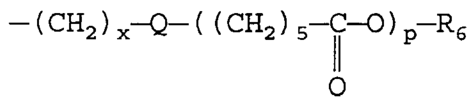

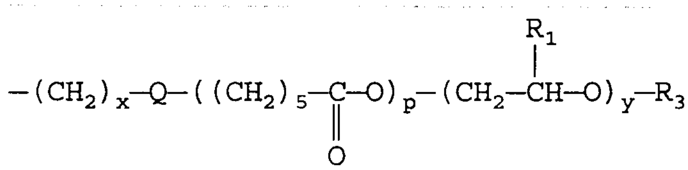

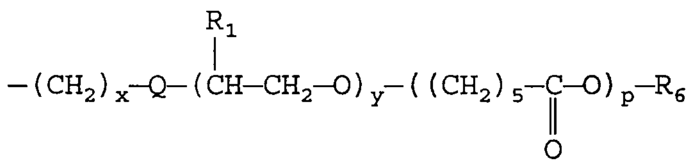

$-(CH_2)_{2-4}-NR_4-R_5$

in which the symbols have the following meanings:

$R_4$ and $R_5$ are alkyl groups with 1 to 4 C atoms or, together with the N atom, form a 5- or 6-membered ring which does not contain a Zerewittinoff H atom,

$R_1$ is $CH_3$ or H,

$R_2$ is H, $-C_nH_{2n+1}$,

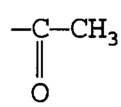

or

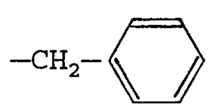

n is a number from 1 to 4,

$R_3$ is a $C_{1-22}$ alkyl or phenyl, which may be substituted by 1 to 3 $C_{1-9}$ alkyl groups,

Q is a group of the structure

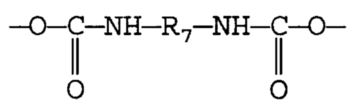

$R_6$ is $C_{1-22}$ alkyl,

$R_7$ is alkylene with 6 or 9 C atoms, 1,3,3-trimethylcyclohexylene-1-methylene, methylphenylene,

x is a number from 2 to 6,

y is a number from 0 to 50,

z is a number from 1 to 50,

p is a number from 1 to 15,
in order to improve levelling and/or to prevent or eliminate foaming in coating and moulding compounds.

**2.** Use of copolymers according to claim 1, characterised in that the symbol R in formula Ia stands for an alkyl residue with 2 to 8 C atoms.

**3.** Use of copolymers according to claims 1 and 2, characterised in that the symbol R in formula Ia stands for an alkyl residue with 2 to 4 C atoms.

**4.** Use of copolymer according-to claim 1, characterised in that the symbol R in formula Ia stands for a perfluoroalkylethyl residue with 4 to 10 C atoms in the perfluoroalkyl chain.

**5.** Use of copolymers according to claims 1 to 4, characterised in that, of 100 repeat units of the formula Ia, at least 5 units are units according claim 4.

**6.** Use of copolymers according to one or more claims 1 to 5, characterised in that the copolymers contain 5 to 25 repeat units of the formula IIa related to 100 repeat units of the formula Ia.

**7.** Use of copolymers according to claims 1 to 6, characterised in that the symbol R' in the formula IIa stands for a hydroxybutylene residue.

**8.** Use of copolymers according to claims 1 to 6, characterised in that the symbol R' in the formula IIa stands for an alkoxypolyoxyalkylene reside with an average molecular weight $\overline{M}_w$ of 300 to 1000.

**9.** Use of copolymers according to claims 1 to 6, characterised in that the symbol R' in the formula IIa stands for a polyester of the formula

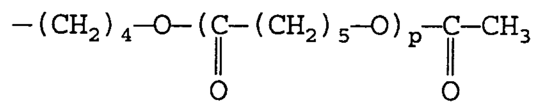

and p stands for 2 to 8.

## Revendications

**1.** Utilisation d'une quantité efficace de copolymères d'éthers alkylvinyliques contenant, pour 100 motifs répétés identiques ou différents de formule

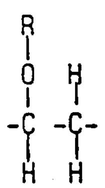

(Ia)

dans laquelle R représente un groupe alkyle en C1-C18 ou un groupe $C_mF_{2m+1}$-$(CH_2)_2$ dans lequel m est un nombre allant de 4 à 18,
1 à 100 motifs répétés identiques ou différents de formule

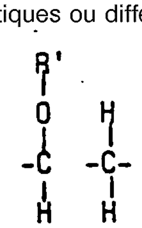

(IIa)

dans laquelle R' représente l'un des groupes suivants :

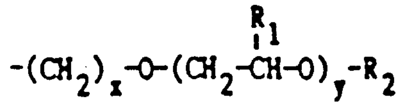

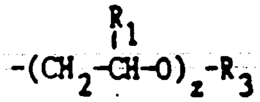

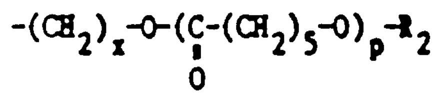

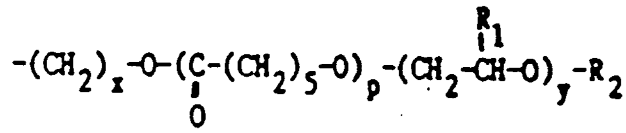

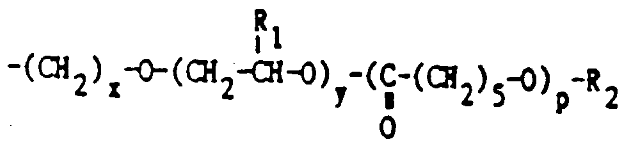

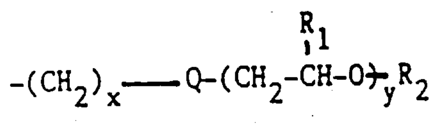

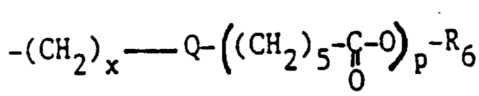

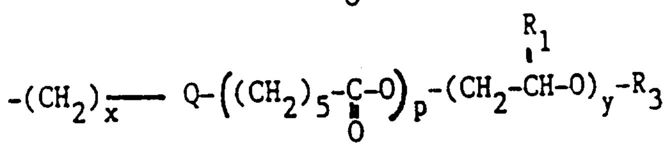

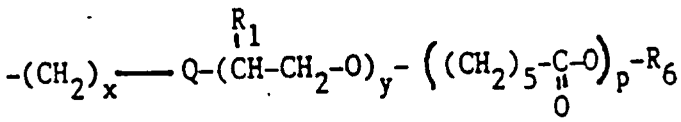

$-(CH_2)_{2-4}-NR_4R_5$

dans lesquels les symboles ont les significations suivantes :

- $R_4$ et $R_5$ représentent des groupes alkyle en C1-C4 ou forment ensemble et avec l'atome d'azote un cycle à 5 ou 6 chaînons ne contenant pas d'atome d'hydrogène de Zerewitinoff,
- $R_1$ représente $CH_3$ ou H, $R_2$ représente H, $-C_nH_{2n+1}$, ou
- $R_2$ représente H, $-C_nH_{2n+1}$,

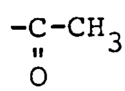

ou

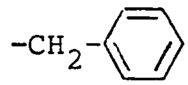 ,

- n — est un nombre allant de 1 à 4,
- $R_3$ — représente un groupe alkyle en C1-C22 ou un groupe phényle qui peut être substitué par 1 à 3 groupes alkyle en C1-C9,
- Q — est un groupe de structure

$$-O-\underset{\underset{O}{\parallel}}{C}-NH-R_7-NH-\underset{\underset{O}{\parallel}}{C}-O-$$

- $R_6$ — représente un groupe alkyle en C1-C22,
- $R_7$ — représente un groupe alkylène en C6 ou C9, un groupe 1,3,3-triméthylcyclohexylène-1-méthylène, méthylphénylène,
- x — est un nombre allant de 2 à 6,
- y — est un nombre allant de 0 à 50,
- z — est un nombre allant de 1 à 50,
- p — est un nombre allant de 1 à 15,

pour améliorer l'étalement (levelling) et/ou pour prévenir ou éliminer les formations de mousses dans les masses de revêtement et les matières à mouler.

**2.** Utilisation de copolymères selon revendication 1, caractérisée en ce que, dans la formule Ia, R représente un groupe alkyle en C2-C8.

**3.** Utilisation de copolymères selon les revendications 1 et 2, caractérisée en ce que, dans la formule Ia, R représente un groupe alkyle en C2-C4.

**4.** Utilisation d'un copolymère selon revendication 1 caractérisée en ce que, dans la formule Ia, R représente un groupe perfluoralkyléthyle contenant 4 à 10 atomes de carbone dans la chaîne perfluoralkyle.

**5.** Utilisation de copolymères selon revendications 1 à 4, caractérisée en ce que, sur 100 motifs rèpétés de formule Ia, au moins 5 motifs sont des motifs selon revendication 4.

**6.** Utilisation de copolymères selon une ou plusieurs des revendications 1 à 5, caractérisée en ce que les copolymères contiennent, pour 100 motifs répétés de formule Ia, 5 à 25 motifs répétés de formule IIa.

**7.** Utilisation de copolymères selon revendications 1 à 6, caractérisé en ce que, dans la formule IIa, R' représente un groupe hydroxybutylène.

**8.** Utilisation de copolymères selon revendications 1 à 6, caractérisée en ce que dans la formule IIa, R' représente un groupe alcoxypolyoxyalkylène ayant un poids moléculaire moyen $\overline{M}w$ de 300 à 1000.

**9.** Utilisation de copolymères selon revendications 1 à 6, caractérisée en ce que dans la formule IIa, R' représente un polyester de formule

$$-(CH_2)_4-O-(\underset{\underset{O}{\parallel}}{C}-(CH_2)_5-O)_p-\underset{\underset{O}{\parallel}}{C}-CH_3$$

dans laquelle p est un nombre allant de 2 à 8.